# EUROPEAN PATENT APPLICATION

(11) **EP 1 726 347 A1**
(43) Date of publication of application: **29.11.2006**
(21) Application number: 06010713.3
(22) Date of filing: 24.05.2006
(51) Int. Cl.: B01D 29/56, B01D 29/86, B01D 35/02, F02M 37/22

(54) **Filter**

(30) Priority: 27.05.2005 JP 2005155218
(71) Applicant: AISAN KOGYO KABUSHIKI KAISHA, Obu-shi, Aichi-ken 474-8588 (JP)
(72) Inventor: Yoshida, Shigeru, Obu-shi Aichi-ken, 474-8588 (JP); Suzuki, Nobuo, Obu-shi Aichi-ken, 474-8588 (JP)
(74) Representative: Kramer - Barske - Schmidtchen

(57) **Abstract**

Filter (30) may comprise a first filter cloth (36) and a second filter cloth (32) disposed downstream from the first filter cloth (36). A particle diameter allowed passage by the second filter cloth (32) may be smaller than a particle diameter allowed passage by the first filter cloth (36). A space (34) may be provided between the first filter cloth (36) and the second filter cloth (32), the space (34) allowing the passage of foreign matter having a particle diameter greater than the particle diameter allowed passage by the first filter cloth (36).

## Description

### BACKGROUND OF THE INVENTION

### Field of the Invention

The present invention relates to a filter (e.g., a suction filter attached to a fuel intake port of a fuel pump) for removing foreign matter from fuel supplied to an internal combustion engine (e.g., an engine for a motor vehicle). Specifically, it relates to the improvement of a filter having a multi-layered configuration in which a plurality of filter cloths overlap.

### Description of the Related Art

Japanese Laid-open Patent Publication No. 2000-246026 discloses a filter for removing foreign matter from fuel supplied to an internal combustion engine. This filter has a structure wherein a plurality of filter cloths overlap. In this filter, a filter cloth at an outermost side (i.e., an upstream side) allows passage of particles with a larger diameter relative to the other filter cloths and the particle diameter allowed passage gradually decreases as the filter cloths are located closer an innermost side (i.e., a downstream side). As a result, foreign matter with a large particle diameter that is in the fuel is removed by the filter cloth at the outer side, and foreign matter with a smaller particle diameter that has passed through the outer filter cloth is removed by the inner filter cloths. Consequently, more foreign matter can be removed than by a filter having a single filter cloth.

### SUMMARY OF THE INVENTION

In a multi-layered filter, foreign matter in fuel enters a filter cloth that does not allow the passage of this foreign matter, and the foreign matter is captured by the filter cloth. The foreign matter therefore accumulates in the filter cloth. In conventional filters, a plurality of filter cloths overlap without space therebetween. As a result, if foreign matter adheres to a boundary face of one filter cloth, the filter cloth adjoining the outer side of this first filter cloth will be obstructed by the foreign matter that has been captured such that the size of the pores of the adjoining filter cloth are reduced. As a result, the pores of the outer filter cloth are obstructed by foreign matter that ought to be captured by the inner filter cloth, and consequently neither of the filter cloths is able to filter efficiently.

Accordingly, it is one object of the present teachings to provide a multi-layered filter in which a plurality of filter cloths overlap, wherein each filter cloth is able to perform filtering efficiently

In one aspect of the present teachings, a filter may comprise a first filter cloth and a second filter cloth disposed downstream from the first filter cloth. A particle diameter allowed passage by the second filter cloth may be smaller than a particle diameter allowed passage by the first filter cloth. A space may be provided between the first filter cloth and the second filter cloth, the space allowing the passage of foreign matter having a particle diameter greater than the particle diameter allowed passage by the first filter cloth.
In this filter, foreign matter that has passed through the first filter cloth (an outer filter cloth) and is captured by the second filter cloth (an inner filter cloth) accumulates in the space formed between the first filter cloth and the second filter cloth. Consequently, the first filter cloth is able to maintain its filtering capacity even though the foreign matter is captured by and accumulates at the second filter cloth, and both the first and the second filter cloths can be used efficiently for filtering. The space allows the passage of foreign matter having a particle diameter greater than the particle diameter allowed passage by the first filter cloth, and the space essentially does not contribute to the removal of the foreign matter. As a result, the filtering capacity of the filter is affected only to a small extent by the foreign matter accumulating in the space.

In the aforementioned filter, the space may be provided between the first filter cloth and the second filter cloth by, for example, disposing heads or anterior parts of rivets between the first filter cloth and the second filter cloth. Further, the rivets may be used to caulk the first filter cloth or the second filter cloth.

Further, the first filter cloth and the second filter cloth may be formed from non-woven cloth. A large amount of foreign matter can be captured by having the first filter cloth and the second filter cloth formed from non-woven cloth. Further, it is possible to effectively increase the capacity for capturing foreign matter of the two layers of non-woven cloth by providing the space between the two.
Furthermore, the filter may further comprise a third filter cloth disposed upstream from the first filter cloth. In this case, the third filter cloth is preferably formed from woven cloth. Abrasion of the first filter cloth can be prevented by disposing the woven cloth upstream from the first filter cloth.
Furthermore, in the aforementioned filter, it is preferred that the rivets is formed from the same material as the first filter cloth and the second filter cloth, or formed from a material having approximately the same melting point as the material of the first filter cloth and the second filter cloth.

In another aspect of the present teachings, a filter may comprise a fourth filter cloth, a fifth filter cloth disposed downstream from the fourth filter cloth, and a sixth filter cloth disposed between the fourth filter cloth and the fifth filter cloth. A particle diameter allowed passage by the fifth filter cloth may be smaller than a particle diameter allowed passage by the fourth filter cloth. The sixth filter cloth may allow the passage of foreign matter having a particle diameter greater than the particle diameter allowed passage by the fourth filter cloth. Thus, the foreign matter accumulates in the sixth filter cloth (i.e., intermediate layer between the fourth filter cloth and the fifth filter cloth), and the filtering capacity of the fourth and fifth filter cloths can be implemented effectively.
In this filter, the fourth filter cloth and the fifth filter cloth may be non-woven cloth, and the sixth filter cloth may be woven cloth or non-woven cloth. Further, this filter may further include a seventh filter cloth disposed upstream from the fourth filter cloth, and the seventh filter cloth may be woven cloth.
It is preferred that the sixth filter cloth is woven cloth, and that the sixth filter cloth and the seventh filter cloth consist of single filament fibers. By having the sixth filter cloth and the seventh filter cloth consist of single filament fibers, the foreign matter does not readily adhere to the sixth and seventh filter cloths.

Furthermore, in the aforementioned filter, it is preferred that the sixth filter cloth is formed from the same material as the fourth filter cloth and the fifth filter cloth, or formed from a material having approximately the same melting point as the material of the fourth filter cloth and the fifth filter cloth. With this type of configuration, the filter cloths can be bonded by ultrasonic welding, high frequency welding, etc.

Further, in a multi-layered filter using non-woven filter cloth, the outermost layer of filter is usually woven cloth so as to prevent the non-woven cloth from being damaged, and the non-woven cloth is disposed within this outermost filter cloth. In conventional filters, the inner filter cloth (i.e., the non-woven cloth) makes contact with the outermost filter cloth (i.e., the woven cloth) without any space therebetween, and consequently foreign matter that adheres to the outermost filter cloth when the fuel is being filtered (when the fuel is being sucked in) encroaches into pores of the inner filter cloth, and therefore continues to adhere to the outermost filter cloth when the fuel sucking operation is halted. As a result, pressure loss of the filter is increased, and filtering capacity decreases.

To deal with this, in another aspect of the present teachings, a filter may comprise an outer filter cloth formed at an outermost layer, and an inner filter layer disposed at an inner side of the outer filter cloth. The outer filter cloth may be formed from woven cloth. The inner filter layer may comprise a single layer or a plurality of layers. At least one layer of the inner filter layer may be formed from non-woven cloth. A space may be provided between the outer filter cloth and the inner filter layer.
In this filter, the space is formed between the outer filter cloth and the inner filter layer, and consequently foreign matter adhering to the surface of the outer filter cloth is prevented from encroaching into the pores of the inner filter layer. As a result, the foreign matter that has adhered to the outer filter cloth peels off the surface of the outer filter cloth when the fuel filtering is halted. It is thus possible to prevent a decrease in filtering capacity.
Heads or anterior parts of rivets may be disposed between the outer filter cloth and the inner filter layer in order to provide the space between the outer filter cloth and the inner filter layer.
Furthermore, it is preferred that the space between the outer filter cloth and the inner filter layer has a clearance at least 30 µm greater than the particle diameter allowed passage by the outer filter cloth. With this type of configuration, the foreign matter that has adhered to the outer filter cloth can be more adequately prevented from encroaching into the inner filter layer.
Further, it is preferred that the rivets for forming the space between the outer filter cloth and the inner filter layer is formed form the same material as the outer filter cloth and the inner filter layer, or formed from a material having approximately the same melting point as the material of the outer filter cloth and the inner filter layer. With this type of configuration, the components that comprise the filter can be bonded by ultrasonic welding, high frequency welding, etc.

In another aspect of the present teachings, a filter may comprise an outer filter cloth formed at an outermost layer, an inner filter layer disposed at an inner side of the outer filter cloth, and an intermediate filter cloth is disposed between the outer filter cloth and the inner filter layer. The outer filter cloth may be formed from woven cloth. The inner filter layer may comprise a single layer or a plurality of layers. At least one layer of the inner filter layer may be formed from non-woven cloth. The intermediate filter cloth may be formed from woven cloth.
In this filter, also, foreign matter that has adhered to the surface of the outer filter cloth is prevented from encroaching into pores of the inner filter layer. If the foreign matter that has adhered to the surface of the outer filter cloth tries to encroach into the intermediate filter cloth, this encroachment does not readily occur due to the intermediate filter cloth being formed from woven cloth, and the foreign matter readily peels off the outer filter cloth when the fuel filtering is halted.
It is preferred that the intermediate filter cloth is formed from woven cloth woven from fibers having a filament diameter of at least 100 µm, and the particle diameter allowed passage thereby is greater than the particle diameter allowed passage by the outer filter cloth. Since the intermediate filter cloth uses woven cloth woven from fibers having a filament diameter of at least 100 µm, and the particle diameter allowed passage thereby is greater than the particle diameter allowed passage by the outer filter cloth, foreign matter that has adhered to the outer layer filter cloth encroaches into the intermediate filter cloth, and it is thus possible to effectively prevent a situation wherein the foreign matter cannot be peeled off the outer filter cloth.

In the aforementioned filters, it is preferred that the outer filter cloth consists of single filament fibers. By using an outer filter cloth consisting of single filament fibers, it is possible to prevent a situation wherein foreign matter continues to adhere to the outer filter cloth even when the filtering has halted.

Further, it is preferred that the intermediate filter cloth is formed from the same material as the outer filter cloth and the inner filter layer, or formed form a material having approximately the same melting point as the material of the outer filter cloth and the inner filter layer. With this type of configuration, the components that comprise the filter can be bonded by ultrasonic welding, high frequency welding, etc.
Furthermore, it is preferred that the particle diameter allowed passage by the outer filter cloth is 35 ~ 70 µm.

In the aforementioned filters, the inner filter layer may comprise a plurality of filter cloths. In this case, it is preferred that at least one of the filter cloths of the inner filter layer has a hydrophobic function, and that the other filter cloths have a hydrophilic function. By combining filter cloths having a hydrophobic function and filter cloths having a hydrophilic function, moisture in the fuel can be removed efficiently.
Further, the filter cloth having the hydrophobic function may be formed from fibers formed from hydrophobic resin material, or may be formed from fibers coated with hydrophobic resin. Moreover, it is preferred that the particle diameter allowed passage by the filter cloth having the hydrophobic function is greater than the particle diameter allowed passage by the filter cloth having the hydrophilic function.

These aspects and features may be utilized singularly or, in combination, in order to make improved filter. In addition, other objects, features and advantages of the present teachings will be readily understood after reading the following detailed description together with the accompanying drawings and claims. Of course, the additional features and aspects disclosed herein also may be utilized singularly or, in combination with the above-described aspect and features.

### BRIEF DESCRIPTION OF THE DRAWINGS

FIG. 1 is a cross-sectional view showing the structure of a filter according to a representative embodiment of the present teachings.
FIG 2 is a cross-sectional view showing the structure of a filter according to another representative embodiment of the present teachings.
FIG. 3 is a cross-sectional view showing the structure of a filter according to another representative embodiment of the present teachings.
FIG. 4 is a cross-sectional view showing the structure of a filter according to another representative embodiment of the present teachings.
FIG. 5 is a cross-sectional view showing the structure of a filter according to another representative embodiment of the present teachings.
FIG. 6 is a cross-sectional view showing the structure of a filter according to another representative embodiment of the present teachings.
FIG. 7 is a cross-sectional view showing the structure of a filter according to another representative embodiment of the present teachings.
FIG 8 is a figure showing measurements measuring pressure loss of the filter when a fuel pump is operated and halted repeatedly.
FIG. 9 is a figure showing a filter device according to the representative embodiment, and a fuel pump to which this filter device has been attached.

### DETAILED DESCRIPTION OF THE INVENTION

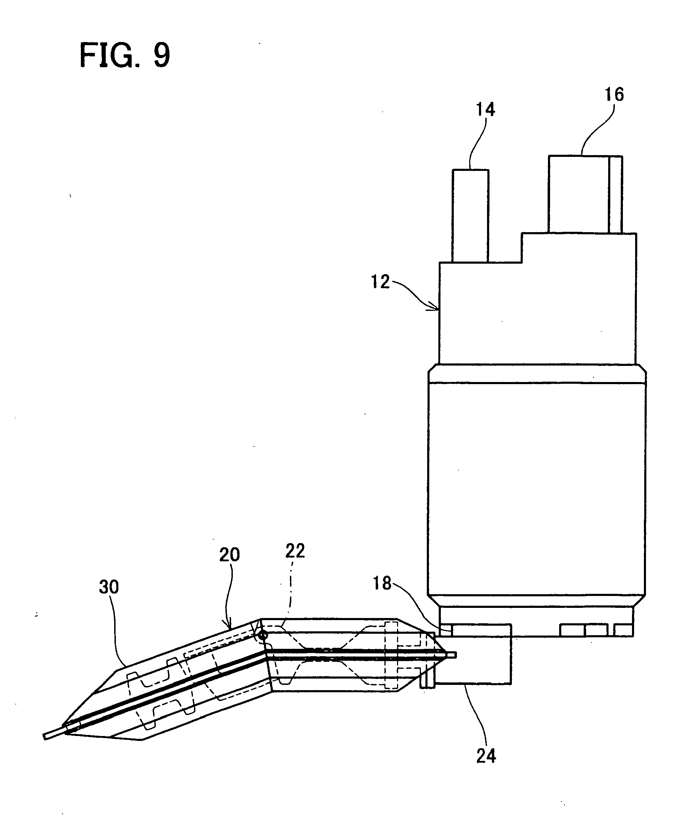

A filter according to a representative embodiment of the present teachings will be described below with reference to figures. The filter may be used as a filter member of a filter device 20 (a suction filter of a fuel pump). As shown in FIG. 9, the filter device 20 is attached to an intake port 18 of a fuel pump 12. The fuel pump 12 is disposed within a fuel tank, and discharges the fuel within the fuel tank to the exterior of the fuel tank.

The fuel pump 12 has a connector 14 and a discharge port 16. The connector 14 and discharge port 16 are formed at an upper face of the fuel pump 12. The connector 14 is connected with a power supply device (not shown). The power supply device supplies power to the fuel pump 12 via the connector 14. A discharge pipe (not shown) is attached to the discharge port 16. An injector is connected to the other end of the discharge pipe, and fuel is supplied to an engine from the injector.

The intake port 18 is formed at a lower face of the fuel pump 12. The filter device 20 is attached to the intake port 18. The filter device 20 comprises a filter 30 formed in a bag shape, a frame 22 housed within the filter 30, and an intake part 24 attached to the fuel intake hole 18.
The filter 30 is a structure wherein filter cloths formed from woven and unwoven cloth, etc., overlap (i.e. the filter 30 is a multi-layered structure wherein a plurality of filter cloths overlap). The filter 30 is formed in a bag shape that encloses the frame 22. The edges of the filter 30 overlap, and this overlapping portion (i.e., the edges of the filter 30) is welded by ultrasonic welding or high frequency welding to form a bag shape.
The frame 22 is housed within the filter 30, and stretches out the filter 30 from within such that a hollow is formed therein. The intake part 24 is attached to the frame 22. The intake part 24 is inserted into the intake port 18 of the fuel pump 12. When the intake part 24 has been attached to the intake port 18, the inner space of the filter 30 communicates with the interior of the fuel pump 12. The intake part 24 and the filter 30 are molded in a unified manner (by insert molding), and foreign matter is unable to enter the inner space of the filter 30 from space between the two.

When the fuel pump 12 is operating, the fuel within the fuel tank is sucked into the inner side of the filter 30, and flows from the outer side to the inner side of the filter 30. At this juncture, foreign matter in the fuel is removed by the filter 30. The fuel that has flowed through the filter 30 passes through the intake port 18, and is sucked into the fuel pump 12. The sucked fuel is pressurized and the pressurized fuel is discharged to the exterior of the fuel tank from the discharge port 16. Further, when the fuel pump is operating (i.e., when the fuel is being sucked in), the frame 22 maintains the filter 30 in a hollow state, and the fuel within the fuel tank is sucked into the filter 30.

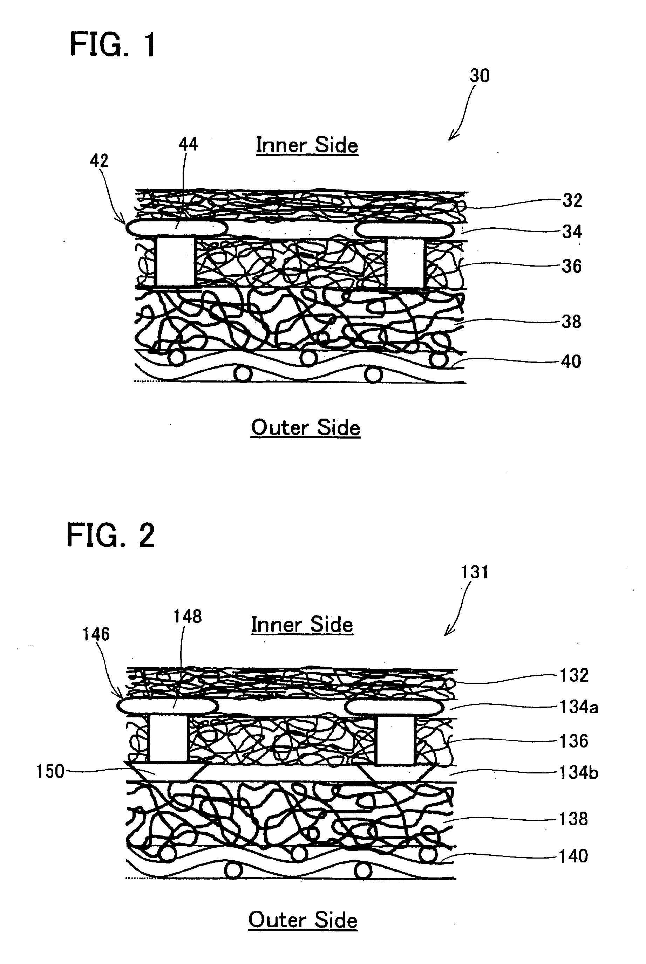

As shown in FIG. 1, the filter 30 comprises, in sequence from the outer side (i.e., the outer side of the filter device 20), a first filter cloth 40, a second filter cloth 38, a third filter cloth 36, and a fourth filter cloth 32. These filter cloths 40, 38, 36 and 32 overlap.
Woven cloth with a plain weave of warp and weft threads may be used in the first filter cloth 40. By using woven cloth in the first filter cloth 40, the first filter cloth 40 can attain a certain degree of wear resistance. It is preferred that a single fiber, formed from a material that is resistant or impermeable to fuel oil(e.g., nylon, polyester, acetal, tetrafluoroethylene resin, etc.), is used as the warp and weft threads of the first filter cloth 40. If twist yarn is used instead of single fiber as the warp and weft threads of the first filter cloth 40, the twist yarn is formed by twisting a plurality of single fibers, and consequently it is possible that small foreign matter adheres to and accumulates at the minute spaces formed where the fibers were twisted.
The size of the pores (i.e., the particle diameter allowed passage) of the first filter cloth 40 can be set as required. For example, the pores may be set to be 35 ~ 70 µm. When the pore size is 35 ~ 70 µm, foreign matter larger than 70 µm cannot enter, and consequently the filter 30 can have a longer life. Further, the first filter cloth 40 may be formed using weaves other than plain weave, such as Dutch weave, twill weave, etc.
Further, the second to fourth filter cloths 38, 36 and 32 are formed from non-woven cloth, and the first filter cloth 40, which is formed from woven cloth, has better wear resistance than the second to fourth filter cloths 38, 36 and 32. As a result, the first filter cloth 40 functions as a protective layer for the second to fourth filter cloths 38, 36 and 32, thus preventing the filter 30 from tearing when making contact with a base face of the fuel tank.

Unlike the first filter cloth 40 (i.e., woven cloth), the second, third, and fourth filter cloths 38, 36 and 32 are formed from non-woven cloth. Since non-woven cloth is used in the second, third, and fourth filter cloths 38, 36 and 32, these filter cloths can remove small foreign matter from the fuel.
The second, third, and fourth filter cloths 38, 36 and 32 may be formed such that resin fibers are formed into a mat shape or sheet shape by any method such as, for example, the spun bonded method, the melt blown method, etc. Non-woven cloth formed by the melt blown method can have mesh (pores) that is finer than in non-woven cloth formed by the spun bonded method. On the other hand, the diameter of the component fibers for non-woven cloth formed by the spun bonded method is comparatively large, and therefore the strength of the fibers can be greater. As a result, the second, third, and fourth filter cloths 38, 36 and 32 may each be formed by either the spun bonded method or the melt blown method in accordance with the performance required. For example, the second filter cloth 38 may be formed by the melt blown method, the third filter cloth 36 may be formed by the melt blown method, and the fourth filter cloth 32 may be formed by the spun bonded method. By forming the filter cloths in this manner, the mesh size (pore size) can gradually become finer from the second filter cloth 38 to the fourth filter cloth 32.

The second, third, and fourth filter cloths 38, 36 and 32 may be formed from a material that is resistant or impermeable to fuel oil, such as nylon, polyester, acetal, tetrafluoroethylene resin, etc. Further, it is preferred that the material used for the first, second, third, and fourth filter cloths 40, 38, 36 and 32 is either the same material, or is a material having approximately the same melting point. Forming the filter cloths 40, 38, 36 and 32 from the same material or a material having approximately the same melting point allows these filter cloths 40, 38, 36 and 32 to be welded together in appropriate positions.

Furthermore, the size of the pores (i.e., the particle diameter allowed passage) of the second, third, and fourth filter cloths 38, 36 and 32 may be set such that the size of all these pores is less than the pore size of the first filter cloth 40, or the pore size thereof may be set such that the size gradually decreases from the second filter cloth 38 to the fourth filter cloth 32. That is, the pore size of the third filter cloth 36 is smaller than the pore size of the second filter cloth 38, and the pore size of the fourth filter cloth 32 is smaller than the pore size of the third filter cloth 36. When the fuel flows from the first filter cloth 40 toward the fourth filter cloth 32, foreign matter that was not removed by the first filter cloth 40 is thus removed by the second filter cloth 38, foreign matter that was not removed by the second filter cloth 38 is removed by the third filter cloth 36, and foreign matter that was not removed by the third filter cloth 36 is removed by the fourth filter cloth 32. Moreover, the size of the pores of the second, third, and fourth filter cloths 38, 36 and 32 may be, for example, as follows: the pore size of the second filter cloth 38 is 20 ~ 80 µm, the pore size of the third filter cloth 36 is 10 ~ 30 µm, and the pore size of the fourth filter cloth 32 is 5 ~ 20 µm.

A tip of a rivet 42 is inserted into the third filter cloth 36, and a head 44 of the rivet 42 is positioned between the third filter cloth 36 and the fourth filter cloth 32. The rivet 42 may be made from either metal or resin. A plurality of these rivets 42 is inserted into the third filter cloth 36 with a determined space therebetween. As a result, the heads 44 of the rivets 42 are disposed between the third filter cloth 36 and the fourth filter cloth 32 with a determined space therebetween, thus forming a space 34 between the third filter cloth 36 and the fourth filter cloth 32.

The filter 30 has the space 34 between the third filter cloth 36 and the fourth filter cloth 32, thus allowing both the third filter cloth 36 and the fourth filter cloth 32 to filter the fuel effectively. That is, if the third filter cloth 36 and the fourth filter cloth 32 make direct contact, the pores of the fourth filter cloth 32 (i.e., the inner filter cloth) are blocked by the filter fibers of the third filter cloth 36 (i.e., the outer filter cloth). Consequently, there is a reduction in the pore area of the fourth filter cloth 32 near the contacting faces of the third filter cloth 36 and the fourth filter cloth 32, and foreign matter can easily clog the fourth filter cloth 32, thus preventing the entirety of the fourth filter cloth 32 from being used effectively for filtering. However, if the space 34 is formed between the third filter cloth 36 and the fourth filter cloth 32, the pores of the fourth filter cloth 32 (i.e., the inner filter cloth) are not blocked by the filter fibers of the third filter cloth 36 (i.e., the outer filter cloth), and the entirety of the fourth filter cloth 32 can be used effectively for filtering.
Furthermore, in the case where the third filter cloth 36 and the fourth filter cloth 32 make direct contact, if foreign matter adheres to and accumulates at the boundary face of the fourth filter cloth 32, the pores of the third filter cloth 36 are blocked by this foreign matter that has adhered and accumulated, and therefore it is not possible to use the entirety of the third filter cloth 36 effectively for filtering. However, if the space 34 is formed between the third filter cloth 36 and the fourth filter cloth 32, the foreign matter adhering and accumulating at the boundary surface of the fourth filter cloth 32 accumulates within the space 34 and does not block the pores of the third filter cloth 36. Consequently, it is possible to use the entirety of the third filter cloth 36 effectively for filtering.

With the above filter device 20, the filtering capacity of the filter cloths 40, 38, 36, and 32 can be made effective, and consequently there is an improvement in the performance of the filter device 20 in capturing foreign matter. As a result, the filtering performance per unit area improves, and consequently the filter device 20 can be made smaller, and can be more easily mounted within the fuel tank.

In the filter of the aforementioned embodiment, the space was formed only between the third filter cloth 36 and the fourth filter cloth 32. However, a space may be formed at the boundary between other adjoining filter cloths. For example, a structure as shown in FIG 2 may be adopted. In the example shown in FIG. 2, a space 134a is formed between the third filter cloth 136 and the fourth filter cloth 132, and a space 134b is also formed between the third filter cloth 136 and the second filter cloth 138. Foreign matter adhering and accumulating at the surface of the third filter cloth 136 therefore accumulates within the space 134b. Consequently, the third filter cloth 136 and the second filter cloth 138 can be made to have a satisfactory filter capacity.
In the example shown in FIG. 2, heads 148 of rivets 146 are disposed between the third filter cloth 136 and the fourth filter cloth 132, thus forming the space 134a, and anterior caulking parts 150 of the rivets 146 are disposed between the second filter cloth 138 and the third filter cloth 136, thus forming the space 134b. That is, the rivets 146 are utilized effectively to form the two spaces 134a and 134b. Furthermore, the third filter cloth 136 is caulked by the heads 148 and the caulking parts 150 of the rivets 146, thus unifying the third filter cloth 136 and the rivets 146. The third filter cloth 136 can thus be handled easily when the filter 130 is being manufactured.

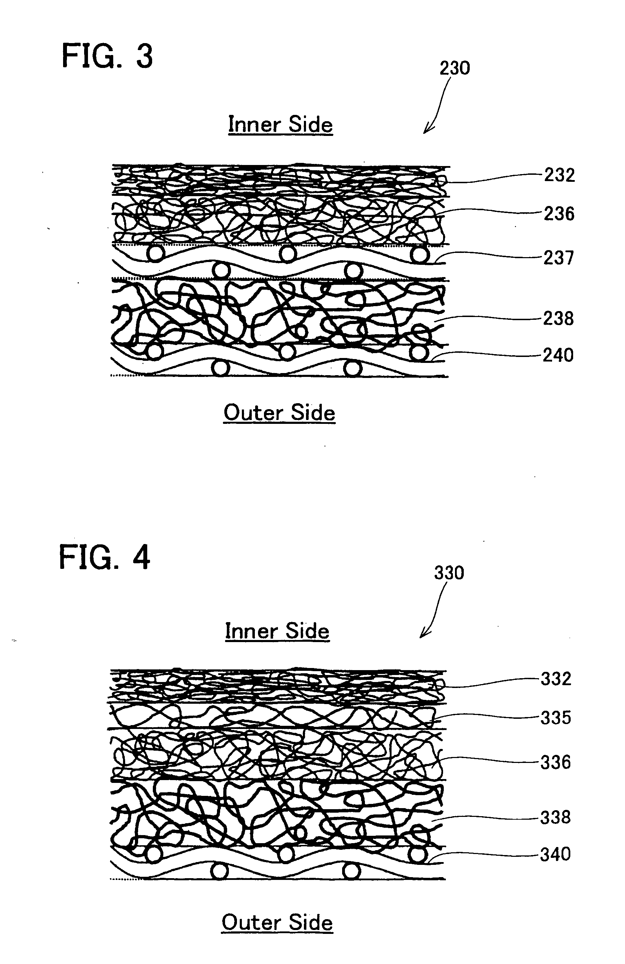

Further, in the filters of the aforementioned embodiments, spaces were formed between adjoining filter cloths. However, the present teachings is not limited to these examples, and a filter cloth having a coarser mesh (having larger pores) than an upstream filter cloth may be disposed between adjoining filter cloths. For example, in a filter of FIG. 3, a filter cloth 237 that has a coarser mesh than the second filter cloth 238 is disposed between the second filter cloth 238 and the third filter cloth 236. Further, in a filter of FIG. 4, a non-woven cloth 335 that has a coarser mesh than the third filter cloth 336 is disposed between the third filter cloth 336 and the fourth filter cloth 332. With this type of embodiment, also, the pores of the downstream filter cloth (i.e., the third filter cloth 236 in FIG. 3, and the fourth filter cloth 332 in FIG. 4) are blocked by the upstream filter cloth (i.e., the second filter cloth 238 in FIG. 3, and the third filter cloth 336 in FIG 4) to a lesser extent than in the case where the downstream filter cloth and the upstream filter cloth make direct contact. Furthermore, foreign matter accumulates within the spaces formed by the filter cloths 237 and 335 disposed between these downstream and upstream filter cloths, and consequently the downstream filter cloths and the upstream filter cloths can be made to have a satisfactory filter capacity. Further, as shown in FIG. 3, in the case where the woven cloth 237 is disposed between the adjacent non-woven cloths 236 and 238, it is preferred that the woven cloth 237 is formed from single fiber yarn. By forming the woven cloth 237 from single fiber yarn, foreign matter can be prevented from adhering to the woven cloth 237 to a greater extent than in the case where the woven cloth 237 is made from twist yarn.

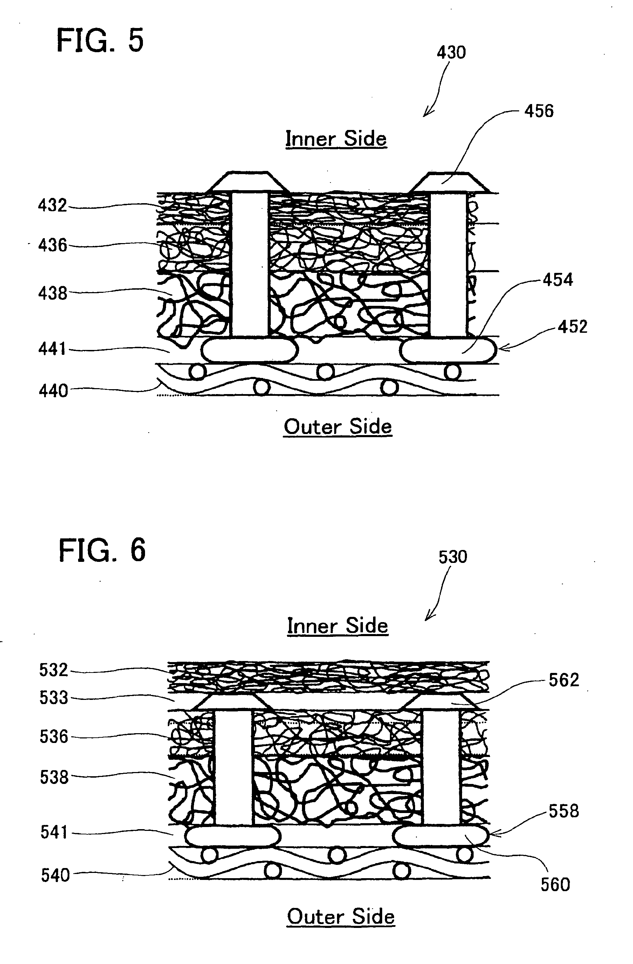

Furthermore, a space 441(541) may be formed between the first filter cloth 440 (540) (i.e., the outermost layer filter cloth) and the second filter cloth 438 (538), as shown in FIGS. 5 and 6. Since the first filter cloth 440 (540) is prevented from making direct contact with the second filter cloth 438 (538), foreign matter that has adhered to the first filter cloth 440 (540) during the fuel pumping operation does not continue to adhere to the first filter cloth 440 (540) when the fuel pumping is halted. That is, even though the outermost layer filter cloth is formed from woven cloth and therefore has a structure to which foreign matter does not readily adhere, when non-woven cloth is disposed so as to make direct contact with this outermost layer filter cloth, the attracting force of the fuel pump causes foreign matter that has adhered to the outermost layer filter cloth during the fuel pumping operation to encroach into the non-woven cloth at the inner side from the pores of the outermost layer filter cloth, and this foreign matter continues to adhere to the outermost layer filter cloth even when the fuel pumping has been halted. As a result, when the operation of the fuel pump is repeatedly halted, damage to the filter gradually increases (i.e., filter capacity gradually falls). However, when the space 441 (541) is formed at the inner side of the outermost layer filter cloth 440 (540), as shown in FIGS. 5 and 6, the foreign matter that has adhered to the outermost layer filter cloth during the fuel pumping operation is prevented from encroaching into the inner filter cloth. As a result, the foreign matter peels off the surface of the outermost layer filter cloth due to the pressure difference between the interior and exterior of the filter, etc. when the fuel pumping is halted, and an increase in damage to the filter (a fall in filter capacity) can be prevented.

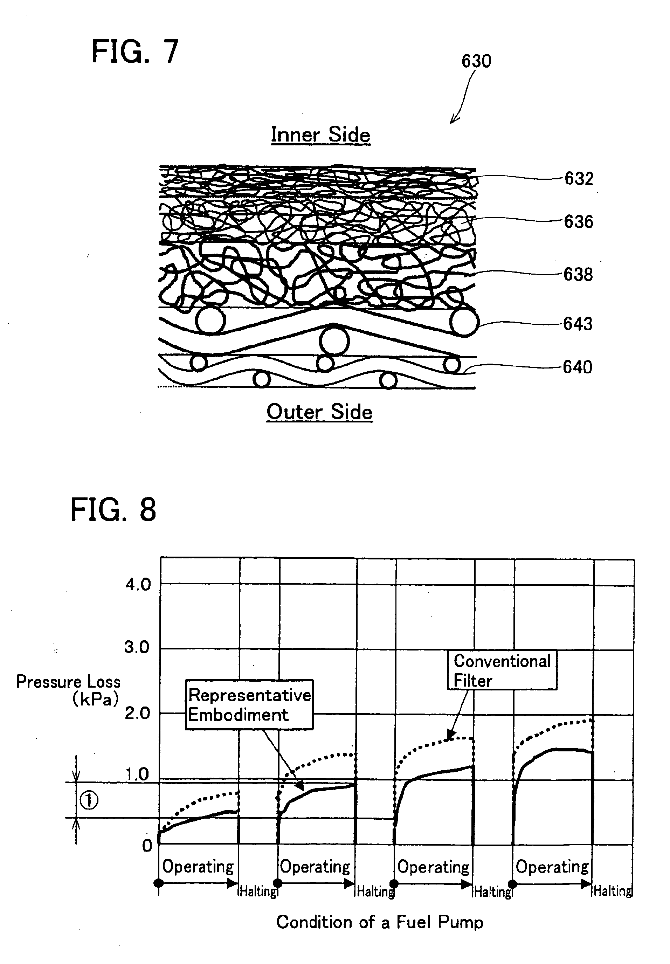

FIG. 8 shows the results when pressure loss was measured when repeatedly operating the fuel pump and halting the fuel pump. The operating conditions of the fuel pump were as follows: flow rate was 100 L/h, fuel pressure was 250 kPa, a constant quantity of dust was input into the tank, and the fuel pump was repeatedly operated and halted. In the measurements, the filter structure shown in FIG. 5 (the filter of the representative embodiment) and a filter structure having the structure shown in FIG. 5 but without a space between the first filter cloth 440 and the second filter cloth 438 (a conventional filter) were utilized. As is clear from FIG 8, the filter having a space between the first filter cloth 440 and the second filter cloth 438 was more able than the conventional filter to prevent an increase in pressure loss of the fuel pump.

As shown in FIGS. 5 and 6, rivets 452 (558) can be utilized to form the space 441 (541) between the first filter cloth 440 (540) and the second filter cloth 438 (538). If the rivets are utilized, the second to fourth filter cloths 438, 436, and 432 may be caulked by the rivets 452, as shown in FIG. 5. Furthermore, the second filter cloth 538 and the third filter cloth 536 may be caulked by the rivets 558, and a space 533 may be formed between the third filter cloth 536 and the fourth filter cloth 532, as shown in FIG. 6.
Furthermore, it is preferred that the space between the first filter cloth 440 (540) and the second filter cloth 438 (538) is at least 100 µm. If the space between the first filter cloth 440 (540) and the second filter cloth 438 (538) is at least 100 µm, the foreign matter can effectively be prevented from encroaching into the filter 430 (530). For example, if the pores of the first filter cloth 440 (540) are 70 µm, the space 441 (541) has a surplus of at least 30 µm more than the pore size, and the foreign matter can therefore effectively be prevented from adhering to the first filter cloth 440 (540).
Further, as shown in FIG. 7, even if a woven cloth 643 having a pore size greater than the first filter cloth 640 is disposed between the first filter cloth 640 and the second filter cloth 638, the same effectiveness can be achieved as with the filter configuration shown in FIGS. 5 and 6. Moreover, it is preferred that the woven cloth 643 has a filament diameter (for example, 100 µm) that is greater than the filament diameter of the first filter cloth 640. By using this type of filter cloth, foreign matter can effectively be prevented from encroaching into the outermost layer filter cloth.

In the aforementioned filters, at least one of the first to fourth filter cloths may have a hydrophobic function and the remaining filter cloths may have a hydrophilic function, such that moisture in the fuel taken into the fuel pump can be removed efficiently. That is, water within the fuel tank is atomized and forms an emulsion due to surplus fuel being returned while the fuel pump is operating or due to vibration of the vehicle or shaking of the fuel while the vehicle is running. However, when the vehicle is halted (in particular when the vehicle is halted overnight when the outside air temperature is low), the water and fuel separate into layers, and the water layer that has been formed collects in the base part of the fuel tank. As a result, it is necessary for both emulsified water atoms and water that has separated into layers to be separated by the filter so that the moisture in the fuel taken into the fuel pump is efficiently removed. Here, the emulsified water atoms have a small diameter, and may be smaller than the pores of the filter cloth. As a result, the moisture rate in the fuel can be reduced by making these emulsified water atoms adhere to the fibers of the filter cloth and thus separating them from the fuel. However, water that has separated into layers forms relatively large water atoms, and consequently it is effective to use the hydrophobic filter cloth to prevent this water from entering the filter. The relatively large atoms are thus prevented from entering the filter by using the filter cloth having a hydrophobic function that is included in the first to fourth filter cloths, and the emulsified water atoms are attracted to the fibers of the filter cloths that have a hydrophilic function. The moisture in the fuel can thus be removed effectively. Rusting of fuel system piping and functional components is thus prevented, and these components have greater reliability and a longer life.

It is preferred that the hydrophilic filter cloths are any of the filter cloths with small pores (that is, the second to fourth filter cloths). The emulsified water atoms can be attracted effectively by causing the filter cloths with small pores to have the hydrophilic function.
Moreover, the filter cloth may be caused to have the hydrophilic function by utilizing a hydrophilic material in the filter cloth (e.g., polyamide, polyethylene terephthalate, etc.). Further, the filter cloth may be caused to have the hydrophobic function by utilizing a hydrophobic material in the filter cloth (e.g., polyethylene, polypropylene, etc.), or by coating a surface of the filter cloth with a hydrophobic material.

Finally, although the preferred representative embodiments have been described in detail, the present embodiments are for illustrative purpose only and not restrictive. It is to be understood that various changes and modifications may be made without departing from the spirit or scope of the appended claims. In addition, the additional features and aspects disclosed herein also may be utilized singularly or in combination with the above aspects and features.
It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A filter for filtering foreign matter from fuel, comprising:
a first filter cloth, and
a second filter cloth disposed downstream from the first filter cloth, wherein a particle diameter allowed passage by the second filter cloth is smaller than a particle diameter allowed passage by the first filter cloth, and
wherein a space is provided between the first filter cloth and the second filter cloth, the space allowing the passage of foreign matter having a particle diameter greater than the particle diameter allowed passage by the first filter cloth.

2. A filter according to claim 1, further comprising a plurality of rivets, wherein heads or anterior parts of the rivets are disposed between the first filter cloth and the second filter cloth, the space thus being provided between the first filter cloth and the second filter cloth.

3. A filter according to claim 1 or 2, wherein the first filter cloth and the second filter cloth are non-woven cloth.

4. A filter according to any one of claims 1-3, further comprising a third filter cloth disposed upstream from the first filter cloth, wherein the third filter cloth is woven cloth.

5. A filter for filtering foreign matter from fuel, comprising:
a fourth filter cloth,
a fifth filter cloth disposed downstream from the fourth filter cloth, wherein a particle diameter allowed passage by the fifth filter cloth is smaller than a particle diameter allowed passage by the fourth filter cloth, and
a sixth filter cloth disposed between the fourth filter cloth and the fifth filter cloth, the sixth filter cloth allowing the passage of foreign matter having a particle diameter greater than the particle diameter allowed passage by the fourth filter cloth.

6. A filter according to claim 5, wherein the fourth filter cloth and the fifth filter cloth are non-woven cloth.

7. A filter according to claim 5 or 6, further comprising a seventh filter cloth disposed upstream from the fourth filter cloth, the seventh filter cloth being woven cloth.

8. A filter according to claim 7, wherein the sixth filter cloth is woven cloth, and the sixth filter cloth and the seventh filter cloth consist of single filament fibers.

9. A filter according to any one of claim 5 or 6, wherein the sixth filter cloth is formed from the same material as the fourth filter cloth and the fifth filter cloth, or is formed from a material having approximately the same melting point as the material of the fourth filter cloth and the fifth filter cloth.

10. A filter for filtering foreign matter from fuel, comprising:
an outer filter cloth formed at an outermost layer, the outer filter cloth being formed from woven cloth, and
an inner filter layer disposed at an inner side of the outer filter cloth, the inner filter layer comprising a single layer or a plurality of layers, wherein at least one layer of the inner filter layer is formed from non-woven cloth, and
wherein a space is provided between the outer filter cloth and the inner filter layer.

11. A filter according to claim 10, further comprising a plurality of rivets, wherein heads or anterior parts of the rivets are disposed between the outer filter cloth and the inner filter layer, the space thus being provided between the outer filter cloth and the inner filter layer.

12. A filter according to claim 10 or 11, wherein the space between the outer filter cloth and the inner filter layer has a clearance at least 30 µm greater than the particle diameter allowed passage by the outer filter cloth.

13. A filter for filtering foreign matter from fuel, comprising:
an outer filter cloth formed at an outermost layer, the outer filter cloth being formed from woven cloth,
an inner filter layer disposed at an inner side of the outer filter cloth, the inner filter layer comprising a single layer or a plurality of layers, wherein at least one layer of the inner filter layer is formed from non-woven cloth, and
an intermediate filter cloth is disposed between the outer filter cloth and the inner filter layer, the intermediate filter cloth being formed from woven cloth.

14. A filter according to claim 13, wherein the intermediate filter cloth is formed from woven cloth woven from fibers having a filament diameter of at least 100 µm, and wherein the particle diameter allowed passage thereby is greater than the particle diameter allowed passage by the outer filter cloth.

15. A filter according to claims 10-14, wherein the outer filter cloth consists of single filament fibers.

16. A filter according to any one of claims 13-15, wherein the intermediate filter cloth is formed from the same material as the outer filter cloth and the inner filter layer, or is formed from a material having approximately the same melting point as the material of the outer filter cloth and the inner filter layer.

17. A filter according to any one of claims 10-16, wherein the outer filter cloth allows the passage of foreign matter having a particle diameter of 35 - 70 µm.

18. A filter according to any one of claims 10-17, wherein the inner filter layer comprises a plurality of layers, wherein at least one layer of the inner filter layer has a hydrophobic function, and wherein the other layer of the inner filter layer have a hydrophilic function.

19. A filter according to claim 18, wherein the particle diameter allowed passage by the layer having the hydrophobic function is greater than the particle diameter allowed passage by the layer having the hydrophilic function.

20. A filter according to any one of claims 10-19, wherein the inner filter layer comprises a first filter cloth, and a second filter cloth disposed downstream from the first filter cloth, wherein a particle diameter allowed passage by the second filter cloth is smaller than a particle diameter allowed passage by the first filter cloth, and wherein a space is provided between the first filter cloth and the second filter cloth, the space allowing the passage of foreign matter having a particle diameter greater than the particle diameter allowed passage by the first filter cloth.

21. A filter according to any one of claims 10-19, wherein the inner filter layer comprises a fourth filter cloth, a fifth filter cloth disposed downstream from the fourth filter cloth, wherein a particle diameter allowed passage by the fifth filter cloth is smaller than a particle diameter allowed passage by the fourth filter cloth, and a sixth filter cloth disposed between the fourth filter cloth and the fifth filter cloth, the sixth filter cloth allowing the passage of foreign matter having a particle diameter greater than the particle diameter allowed passage by the fourth filter cloth.
